# EUROPEAN PATENT APPLICATION

(11) **EP 0 589 174 A1**
(43) Date of publication of application: **30.03.1994**
(21) Application number: 93111901.0
(22) Date of filing: 26.07.1993
(51) Int. Cl.: B01D 50/00, B01D 53/34

(54) **A device for treating fumes generated by a dental oven**

(30) Priority: 27.07.1992 IT TO920644
(71) Applicant: C.I.E. DENTALFARM S.r.l., I-10138 Torino (IT)
(72) Inventor: Bertotti, Massimo, I-10078 Venaria Reale (Torino) (IT)
(74) Representative: Marchitelli, Mauro

(57) **Abstract**

A device for purifying and deodorising fumes, in particular fumes generated by ovens for use in dental technology, the working of gold and the like, comprises an ejector (13) for atomised aqueous solution which acts on the fumes in order to bring down the solid particles transported by the latter. The aqueous solution is collected in a chamber (7) and is returned to the ejector (13) by means of a recirculation pipe (16,17), whereby most of the solid particles are retained by a cartridge filter (19a). A further series of filters (19b,31) associated with a heating chamber (29) disposed downstream of the collection chamber (7) permits the temperature and humidity of the fumes to decrease to optimum levels for interaction with chemical purification means (34), before the fumes are ejected into the exterior.

## Description

The object of the present invention is a device for purifying and deodorising fumes.

The invention has been developed with particular reference to a device for purifying and deodorising the fumes generated by ovens for use in dental technology, the working of gold and the like.

In precision casting operations, which generally involve the preparation of a second pattern using modelling wax, during the process of drying the casting cylinders used as casting moulds, and more specifically in the stages of evaporation and combustion of the waxes, combustion fumes are produced which contain a considerable quantity of solid particles in suspension, in addition to free radicals and gases produced during combustion. These components are highly pollutant and detrimental to the human body and to the environment, as well as constituting a source of unpleasant smells.

Purification devices are known which tend to eliminate mainly the unpleasant smells by using extractor hoods provided with beds of activated carbon, which combines chemically with the free radicals present in the fumes. These devices are complicated and expensive to construct, require a large installation space, and are impratical since they require the oven to be insulated inside the hood for each drying cycle.

European Application No. 379472 filed by the same Applicants shows a device for separating solid particles from the air discharged from a sanding chamber, by means of an atomised water ejector which brings down the dross transported by the air entering the device. However, a device of this type relates to an area of application which differs totally from that of the present invention.

The object of the present invention is to overcome the disadvantages of known devices, by providing a device for purifying and deodorising fumes, which has the characteristics indicated in the following claims.

The device according to the present invention is particularly compact, economical and simple to produce, and is easy to use since it does not require complex, costly maintenance operations.

Additionally the device according to the present invention has the advantage that it conveys the fumes at optimum conditions of temperature and humidity, in a manner such as to promote improved action of the chemical purification means and to considerably reduce the quantities thereof required, simultaneously prolonging their service life before they need to be replaced.

Further characteristics and advantages will become apparent from the following description, provided purely by way of non-limiting example, with reference to the attached drawings, in which:
- Figure 1 is a lateral sectional view of the purifying device according to the invention;
- Figure 2 is a longitudinal section of an enlarged detail of Figure 1;
- Figure 3 is a view along arrow III of Figure 2;
- Figure 4 is a longitudinal section of an alternative detail of Figure 2;
- Figure 5 is a view along arrow V of Figure 4; and
- Figure 6 is a section on an enlarged scale of an alternative cartridge element of the device of Figure 1.

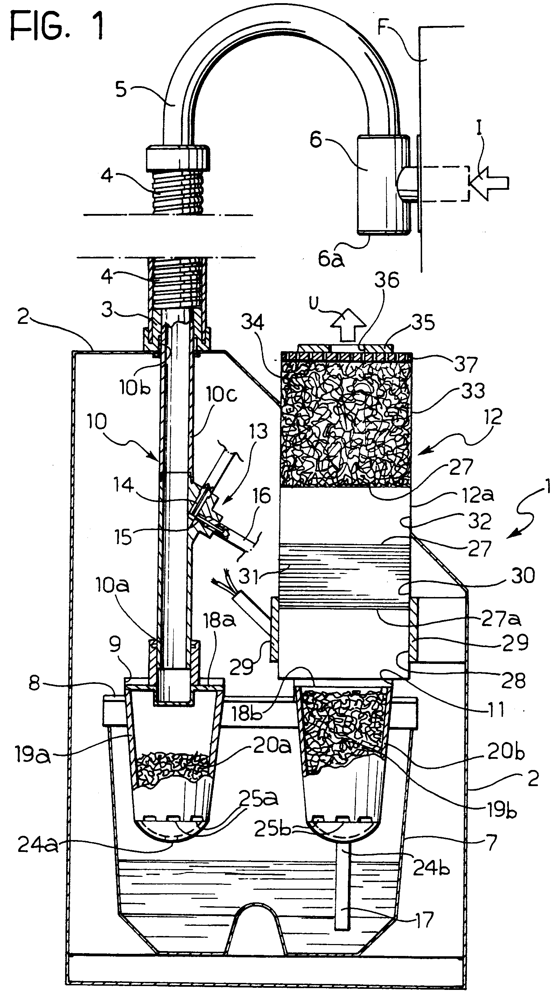

With reference to Figure 1, a purifying device generally indicated 1 comprises an outer housing 2 which has a coupling element 3 for a flexible tube 4 inside which the fumes obtained from the oven F are conveyed. Between the flexible tube 4 and the oven F there is interposed an inverted U-shaped metal connection pipe 5 provided at one end with a T-joint 6 which opens both inside the chamber of the oven F and outside via the aperture 6a.

Inside the housing 2 is a container 7 of known type which has a cover 8, which is preferably integral with the container 7, with a first aperture 9 in which there is disposed an end 10a of a vertical inlet pipe 10, of which the upper end 10b extends beyond the housing 2 and communicates with the flexible tube 4 via the coupling element 3. A second aperture 11 in the cover 8 accommodates a cartridge element, generally indicated 12, the upper portion of which also extends beyond the housing 2.

The inlet pipe 10 has a central portion 10c with which there is associated an ejector device 13 of known type, comprising a first nozzle 14 for the intake of compressed air and a second nozzle 15 for the intake of a liquid,preferably water or aqueous solution, connected by means of a flexible tube 16 to a drawing tube 17, the lower end of which is disposed substantially at the base of the container 7.

A first mechanical filtering cartridge 19a, which is partially filled with stainless metal wool 20a, is mounted through a perforated cover 18a on the lower portion 10a of the inlet pipe 10. The cartridge element 12 comprises a substantially cylindrical casing 12a which is connected at the base to a second mechanical filtering cartridge 19b, which is similar to the cartridge 19a and is held inside the container 7, which is completely filled with stainless metal wool 20b.

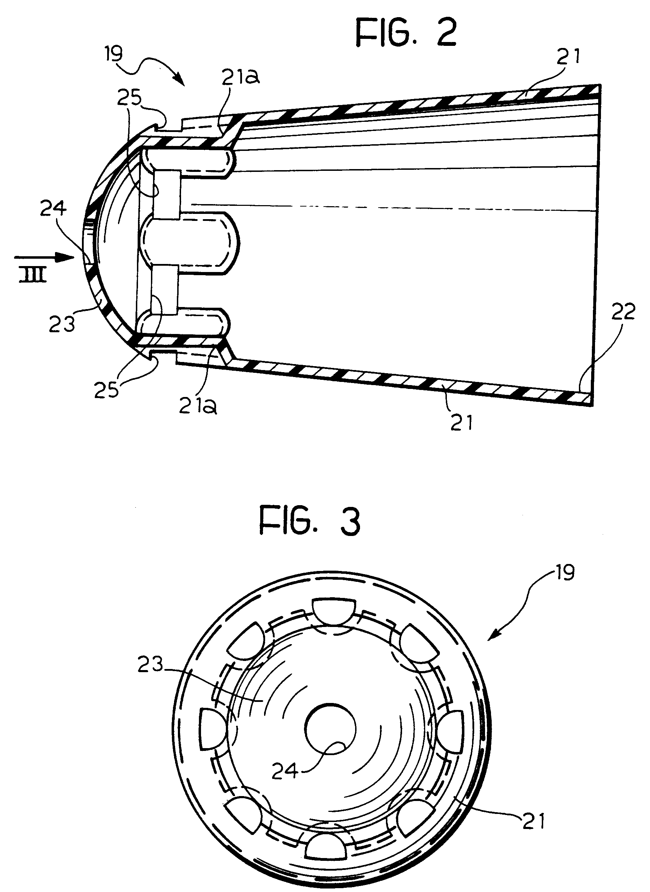

As can be seen in Figures 2 and 3, each filtering cartridge 19a, 19b, jointly indicated 19, comprises a peripheral shell 21 which is substantially frusto-conical and forms a mouth 22 which is intended to be closed respectively by the covers 18a, 18b (see Figure 1). At the end opposite the mouth 22, each filtering cartridge 19 is closed by a base 23 in the form of a spherical bowl which has a central aperture 24a, 24b and is generally indicated 24. Along the entire perimeter of the shell 21, in the vicinity of the base 23, is a pliirality of radial slots 25 (25a, 25b respectively in Figure 1) produced by means of peripheral milling of the cartridge 19, after radial recesses 21a have been produced in its outer shell.

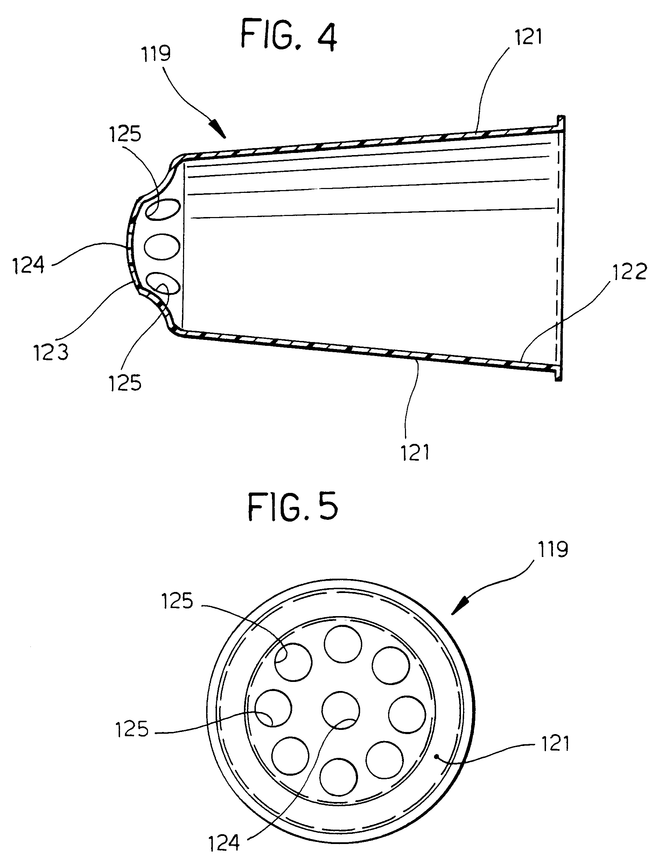

In Figures 4 and 5 an alternative filtering cartridge, generally indicated 119, is illustrated, comprising a peripheral shell 121 which is substantially frusto-conical and forms a mouth 122 which is substantially analogous to the mouth 22 of the above-described cartridge 19. Even the cartridge 119 is closed by a base 123 in the form of a spherical bowl which has a central aperture 124. A plurality of holes 125 is provided on the base 123, the holes being annularly disposed around the central aperture 124, and having their axes parallel to the axis of the aperture. The holes 125 are obtained during the moulding of the cartridge 121 which is preferably of plastics material, working operations being therefore reduced with respect to the production of cartridge 19.

With reference to Figure 1, inside the cartridge element there are two perforated discs 27 and a retaining ring 27a which are spaced from one another in the direction of the axis of the casing 12a, which are force-fitted in the latter, and which define four adjacent, consecutive cylindrical chambers. A first, lower, heating chamber 28 is surrounded on the outside of the casing 12a by an annular electrical element 29, which also partially covers an upper fine filtering chamber 30 filled with a pad 31 of glass wool. Above the fine filtering chamber 30 is a cooling chamber 32 on top of which is a chemical purification chamber 33 filled with a bed of activated carbon 34. The cartridge element 12 is closed at the top by a closure element 35 which has a central aperture 36 for the discharge of fumes, and which has, on its bottom side, a grille 37 for containing the activated carbon 34.

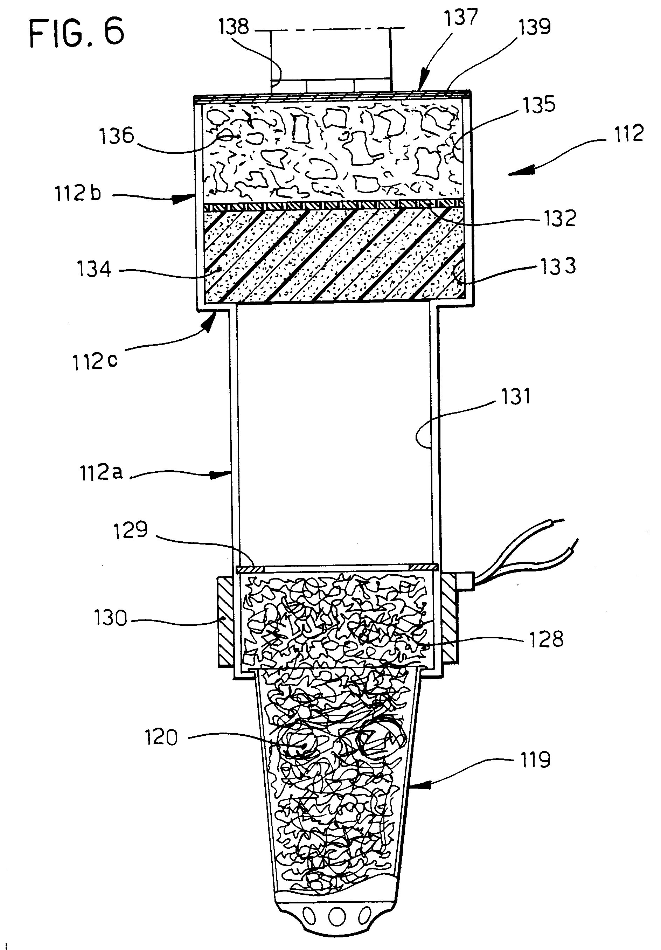

An alternative cartridge element 12 is illustrated in Figure 6 and indicated with reference numeral 112 and comprises a first lower cylindrical portion 112a and a second upper cylindrical portion 112b having a greater diameter than that of the lower portion 112a. In the connection area between the two cylindrical portions 112a, 112b an annular abutment 112c is provided, the function of which will be clear thereafter. The cartridge element 112, formed by the two cylindrical portions 112a, 112b together, can be manufactured either in a single piece or in two different pieces assembled in a generally known way so as to form the annular abutment 112c. At the lower end of the cartridge element 112 is mounted, as above-described with reference to the cartridge element 12 of Figure 1, the filtering cartridge 119 completely filled with a stainless metal wool 120 which extends into the cartridge element 112 so as to fill also a first lower heating chamber 128, above-delimitated by an annular partition wall 129 forced within the lower cylindrical portion 112a and having the function of preventing the expansion upwards of the metal wool 120 during the use of the purifying device. The heating chamber 129 is surrounded on the outside of the cylindrical portion 112a by an annular electrical element 130, preferably a sheet structure which is disposed externally in contact with the cylindrical portion 112a. Above the heating chamber 129, the lower cylindrical portion 112a defines a cooling chamber 131 which extends up to the annular abutment 112c.

The upper cylindrical portion 112b is divided into two adjacent and consecutive chambers by a perforated disc 132. The fine filtering lower chamber 133 contains a pad 134 of glass wool. The upper chemical purification chamber 135 is filled with a pad of activated carbon 136. Similarly to the above-described cartridge element 12, the cartridge element 112 is also closed at the top by a closure element 137 which has a central aperture 138 for the discharge of fumes, and which has, on its bottom side, a grille 139 for containing the activated carbon 136.

When the oven F is being used, in particular during the stages of evaporation and combustion of the modelling wax, fumes containing solid particles, vapours and gases are produced and are processed consequentially and differentially on the path they follow, leaving the oven F in the direction of the arrow I in Figure 1, entering the purification device, and subsequently emerging through the aperture 36 in the direction of the arrow U.

The fumes are drawn at a constant speed by means of pneumatic depression created by the Venturi effect, which is produced by the intake of compressed air through the ejector device 13, which gives rise to the aspiration of a considerable quantity of air through the aperture 6a and substantially lowers the temperature of the fumes obtained from the oven F. The first filtering action, which essentially involves the solid particles, consisting of dust and vapours of wax condensed by the cooling action of the aqueous solution, takes place along the path of the fumes in the pipe 10, in which the latter are subjected to the action of the atomised aqueous solution which incorporates the said microparticles and solidifies a substantial portion of the wax transported by the fumes. The fumes then pass through the filtering cartridge 19a which collects a considerable part of the solid sediment and most of the atomised aqueous solution which, through the aperture 24a disposed in the lower part of the cartridge 19a, gathers on the base of the container 7, such that it can be re-used for atomisation by means of aspiration by the compressed air, through the recirculation pipe 16, 17. As the fumes pass through the stainless metal wool 20a they are slowed down, and emerge from the holes 125 or slots 25a, the radial arrangement of which permits a reduced flow which is directed such that it does not cause important turbulence in the liquid medium in the container 7. The fumes then pass through the filtering cartridge 19b, entering the latter through the slots 25b, such that the speed of the fumes is further slowed, and further condensation of the water vapour transported by the fumes takes place, which returns to the container 7 through the aperture 24b. The content of metal wool 20a in the filtering cartridge 19a is lower than that in the cartridge 19b, because of the greater volume of sediment which is retained in the first cartridge.

With reference to the embodiment shown in Figure 1, the fumes then pass through the heating chamber 28, in which their relative humidity decreases since they then pass through the glass wool 31. The glass wool layer serves a triple purpose, that is:
- thermal insulation of the upper portion of the cartridge element 12;
- filtration of the most-microscopic particles still transported by the fumes; and
- further limitation of the water conveyed by the fumes.

Regarding the latter point, it should be remembered that the efficiency of the filtering action of the glass wool 31 could be reduced by the film of condensation which forms on its lower surface. In order to overcome this disadvantage, the heating element 29 also surrounds the lower portion of the chamber 30 filled with the glass wool 31, in order to assist drying of the latter and to keep it working efficiently.

Above the chamber 30, the cooling chamber 32 stabilises the temperature and humidity of the fumes, within the correct limits for optimum effective action of the activated carbon 34 through which the fumes pass before they emerge through the aperture 36 in the lid 35.

In the embodiment of the filtering cartridge 112, illustrated in Figure 6, the way in which the fumes are purified is performed slightly differently even if it meets the above-indicated general principles.

The presence of the metal wool 120 which completely fills the heating chamber 128 allows, due to the good thermal conduction coefficient shown by the wool, the temperature inside the heating chamber 128 to be uniform and substantially correspondent to the temperature of the electrical element 130.

In this case, the residual humidity transported by the fumes through the chamber 128 is greatly reduced, and nevertheless is reduced of a greater amount than in the above-described case of the cartridge 12.

The fumes which pass through the heating chamber 128 are then cooled by passing through the cooling chamber 131, before passing through the glass wool layer 134, which provides, as in the previous case, the fine filtering of the impurities transported by the fumes. Finally, after the chemical purification operated by the activated carbon layer 136, the fumes emerge through the aperture 138 provided on the top of the cartridge 112.

The device according to the present invention enables environmental atmospheric pollution to be kept to a minimum, permitting the collection, in the elements which constitute the purification device 1, of toxic wastes, which elements can easily be replaced by virtue of their modular form. In particular, the cartridge element 12 or the corresponding element 112, the container 7 and the filtering cartridge 19, 119, can be supplied as spare elements which can also be replaced directly by the user of the precision casting oven.

Additionally, in the device according to the invention, the activated carbon layer is kept to the essential minimum, and operates in the best conditions by virtue of the combination of the filtering elements disposed upstream, which prevent it from becoming saturated by the heavier dross, the finer particles and the humidity present in the fumes discharged by the oven F. A further advantage of the purification device disclosed lies in the fact that, since the load losses are kept substantially constant throughout the life of the filtering elements, it is unnecessary to increase the pressure of the compressed air used for the aspiration of the fumes from the oven, which would cause an unacceptable drop in the temperature inside the oven.

Besides, in the second embodiment of the present invention, illustrated in Figure 6, by providing the annular abutment 112c which connects the lower cylindrical por- tion 112a with the upper cylindrical portion 112b, it is allowed a further expansion of the fumes passing through the chambers 133, 135, said expansion determining on the one hand a further reduction of the speed of the fumes, on the other hand helping to keep the section for the passage of fumes large enough even when, due to an intensive use of the device 1, an impurity concentration in the glass wool layer 134 and a saturation of the activated carbon 136 are reached, which are approaching the conditions for which a replacement thereof is due.

Naturally, the principle of the invention remaining the same, the forms of embodiment may vary widely from those described and illustrated purely by way of non-limiting example, without thereby departing from the scope of the present invention.

## Claims

1. A device for purifying and deodorising fumes, in particular fumes generated by ovens used for dental technology, the working of gold and the like, characterised in that it comprises:
- a fume inlet pipe (10);
- ejector means (13) for admitting atomised liquid into the fume inlet pipe (10);
- a liquid collection chamber (7), into which the fume inlet pipe (10) leads;
- a pipe (12a) for the discharge of the fumes from the liquid collection chamber;
- chemical purification means (34) interposed in the fume discharge pipe (12a) downstream of the liquid collection chamber (7);
- filtering means (19a, 19b, 31) capable of acting on the fumes into which the atomised liquid has been admitted, and disposed upstream of the chemical purification means (34).

2. A device according to Claim 1, characterised in that the filtering means (19a, 19b, 31) comprise a first filtering element (19a) associated with the fume inlet pipe (10) downstream of the ejector means (13) and a second filtering element (19b, 31) interposed between the liquid collection chamber (7) and the chemical purification means (34).

3. A device according to Claim 2, characterised in that the second filtering element comprises a first filtering portion (19b, 119) and a second filtering portion (31, 134) separated by a fume heating chamber (28, 128).

4. A device according to Claim 3, characterised in that the fume heating chamber (28, 128) is associated with electric heating means.

5. A device according to Claim 4, characterised in that the electric heating means (29) are capable of acting at least partially on one of said first and second filtering portions (119, 31) of the second filter element (19b, 31, 119, 134) in order to reduce the liquid content thereof.

6. A device according to Claim 1, characterised in that the fume outlet pipe (12a, 112) has a substantially cylindrical shape, the chemical purification means (34, 136) being disposed in the vicinity of its end which is furthest away from the liquid collection chamber (7).

7. A device according to Claim 4 and Claim 6, characterised in that the second filtering portion (31, 134) is disposed inside the cylindrical pipe (12a, 112) and the heating means comprise a sheet structure (29, 130) which is disposed externally in contact with the cylindrical pipe (12a, 112), and is wrapped around a greater part of its periphery.

8. A device according to Claim 7, characterised in that the second filtering portion (134) is supported at least partially inside the cylindrical pipe (112) by an annular abutment (112c) provided in correspondence with a diameter variation of the cylindrical pipe (112).

9. A device according to Claim 1, characterised in that the filtering means comprise at least one chamber body (19, 119) which has a mouth (22, 122) and a base (23, 123), the chamber body having at least a first aperture (25, 125) for the passage of fumes and a second aperture (24, 124) for the passage of liquid.

10. A device according to Claim 9, characterised in that the chamber body (19, 119) is filled at least partially with a loose filling material (20a, 20b, 120) which purifies the fumes passing through the chamber body.

11. A device according to Claim 10, characterised in that the material (20a, 20b, 120) is a stainless metal wool.

12. A device according to Claim 1, characterised in that the liquid to be atomised is taken from the liquid collection chamber (7) by means of a recirculation pipe (16, 17) which communicates with the ejector means (13).

13. A device according to Claim 1, characterised in that it is contained at least partially inside a housing (2), the filtering means being at least partially associated removably with the housing (2).
